(19) **Europäisches Patentamt / European Patent Office / Office européen des brevets**

(11) **EP 2 332 794 A1**

(12) **EUROPEAN PATENT APPLICATION**
published in accordance with Art. 153(4) EPC

(43) Date of publication:
**15.06.2011 Bulletin 2011/24**

(51) Int Cl.:
***B60T 7/12*** $^{(2006.01)}$

(21) Application number: **09815989.0**

(22) Date of filing: **28.07.2009**

(86) International application number:
**PCT/JP2009/063385**

(87) International publication number:
**WO 2010/035572 (01.04.2010 Gazette 2010/13)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **25.09.2008 JP 2008246152**

(71) Applicant: **Hitachi Automotive Systems, Ltd.
Hitachinaka-shi
Ibaraki 312-8502 (JP)**

(72) Inventors:
• **YOKOYAMA Atsushi
Hitachinaka-shi
Ibaraki 312-0034 (JP)**
• **SAITO Shinjiro
Hitachinaka-shi
Ibaraki 312-0034 (JP)**
• **YOSHIDA Tatsuya
Hitachinaka-shi
Ibaraki 312-8503 (JP)**

(74) Representative: **MERH-IP
Matias Erny Reichl Hoffmann
Paul-Heyse-Strasse 29
80336 München (DE)**

(54) **A VEHICULAR DECELERATION AIDING DEVICE**

(57) A deceleration aiding device capable of achieving deceleration control which reflects a driver's intention more accurately according to a driver's intention to decelerate a vehicle, and by which the acceleration of the vehicle is difficult to exceed a road surface friction coefficient is provided. The deceleration aiding device includes: a road information acquisition unit (5a) for acquiring information of a curved road in front of a vehicle; a curve information calculation unit (52) for calculating a section length from the vehicle to an entrance position of the curved road based on the information of the curved road; a start timing determination unit (54) for determining a start timing for starting deceleration control of the vehicle according to a driving state of the vehicle; a target deceleration calculation unit (55) for calculating a target deceleration in the deceleration control; and a deceleration control unit (56) for performing deceleration control on the vehicle based on the target deceleration, wherein the target deceleration calculation unit (55) calculates the target deceleration based on the section length and a vehicle speed at the start timing such that a deceleration of the vehicle in the deceleration control and a lateral acceleration of the vehicle when traveling along the curved road are larger as the section length is shorter.

FIG. 2

**Description**

Technical Field

The present invention relates to a deceleration aiding device for aiding deceleration of a traveling vehicle, and more particularly, to a vehicular deceleration aiding device capable of preferably performing deceleration control when a vehicle enters a curved road.

Background Art

Conventionally, a technique of acquiring information of roads in front of a traveling vehicle and performing deceleration control on the vehicle when the vehicle approaches a curved road has been generally well known. The deceleration control is performed on vehicles based on the radius of curvature of a curved road in front of a traveling vehicle and the traveling state of the subject vehicle.

Examples of a method for performing deceleration control on vehicles include a method of controlling decelerations to a uniform degree according to the radius of curvature of a curved road in front of a vehicle. However, when deceleration control is performed on a vehicle simply by using the method, driver's operation intentions to accelerate or decelerate the vehicle cannot be sufficiently reflected. Thus, drivers may feel uncomfortable during deceleration.

In view of the above point, for example, to perform deceleration control reflecting driver's operation intentions, there has been proposed a control device which performs deceleration control by calculating a target vehicle speed of a vehicle traveling along a curved road based on the road curvature (the radius of curvature) of the curved road, and, when operation of an accelerator pedal by a driver is detected during the deceleration control, correcting the target vehicle speed based on a vehicle position where the accelerator pedal operation is performed and an accelerator pedal operation amount without controlling decelerations to a uniform degree (for example, see Patent Document 1).

Patent Document 1

JP Patent Publication (Kokai) No. 2007-230440A

Disclosure of the Invention

Problems to be Solved by the Invention

When the control device as disclosed in Patent Document 1 is used to control a traveling vehicle, the target vehicle speed of the vehicle is corrected such that a deceleration in deceleration control is smaller as an accelerator pedal operation amount by a driver before the vehicle enters a curved road is greater.

To be more specific, the control device corrects the target vehicle speed such that the deceleration of the traveling vehicle is smaller as the vehicle is closer to the entrance position of the curved road at a timing when the deceleration control is started. In this case, while the vehicle speed changes slowly until the vehicle enters the curved road, the vehicle speed immediately after entering the curved road is faster than that in normal deceleration control. As a result, the vehicle speed cannot be reduced to a sufficient level by the time immediately after entering the curved road, so that the acceleration of the vehicle tends to exceed a road surface friction coefficient in its direction due to a lateral acceleration acting on the vehicle after entering the curved road.

The present invention has been made to solve such problems, and it is an object of the invention to provide a deceleration aiding device capable of achieving deceleration control which reflects a driver's intention more accurately according to a driver's intention to decelerate a vehicle, and by which the acceleration of the vehicle is difficult to exceed a road surface friction coefficient.

Means for Solving the Problems

To attain the above object, a deceleration aiding device according to the present invention acquires information of a curved road in front of a vehicle, calculates a section length from the vehicle to an entrance position of the curved road based on the acquired information of the curved road, determines a start timing for starting deceleration control of the vehicle according to a driving state of the vehicle, calculates a target deceleration based on the section length and a vehicle speed at the start timing such that a deceleration of the vehicle in the deceleration control is larger as the section length is shorter, or a deceleration of the vehicle in the deceleration control and a lateral acceleration of the vehicle when traveling along the curved road are larger as the section length is shorter, and performs deceleration control on the vehicle based on the target deceleration.

Advantages of the Invention

The present invention enables deceleration control which reflects a driver's intention more accurately by decelerating a vehicle before entering a curved road according to a driver's intention to decelerate the vehicle, by which the acceleration of the vehicle is difficult to exceed a road surface friction coefficient with respect to a road surface when the vehicle enters a curved road, and which allows the vehicle to pass through the curved road in a highly robust state with respect to a change in the road surface friction coefficient.

Brief Description of the Drawings

Figure 1 is an entire configuration diagram of a vehicle on which a deceleration aiding device according to a present embodiment is mounted.
Figure 2 is a control block diagram of the deceleration aiding device according to the present embodiment shown in Figure 1.
Figure 3 is a control flow chart for performing deceleration control based on the control block diagram of the deceleration aiding device shown in Figure 2.
Figures 4 are views for explaining a relationship between a vehicle and a curved road in deceleration control: Figure 4(a) is a view for explaining deceleration control when a section length L is long; and Figure 4(b) is a view for explaining deceleration control when the section length L is shorter than that in Figure 4(a),
Figures 5 are views illustrating changes in a vehicle speed, a deceleration and a lateral acceleration when the deceleration control according to the present embodiment is performed: Figure 5(a) is a view illustrating changes during the deceleration control when the section length L is long; and Figure 5(b) is a view illustrating changes during the deceleration control when the section length L is shorter than that in Figure 5(a).
Figures 6 are views illustrating changes in a vehicle speed, a deceleration and a lateral acceleration when a target deceleration is fixed regardless of the section length: Figure 6(a) is a view illustrating changes during the deceleration control when the section length L is long; and Figure 6(b) is a view illustrating changes during the deceleration control when the section length L is shorter than that in Figure 6(a).
Figure 7 is a view for explaining a relationship between a vehicle and a curved road in the deceleration control.
Figure 8 is a view illustrating a vehicle speed, a deceleration and a lateral acceleration when the deceleration control is performed using the deceleration aiding device according to the present embodiment.
Figure 9 is a view illustrating a vehicle speed, a deceleration and a lateral acceleration when the deceleration control is performed using a conventional control device.
Figure 10 is a view for explaining a method of calculating a target deceleration according to another aspect of the present embodiment.

Description of Symbols

10 ... Controller (Deceleration aiding device), 22 ... Steering angle sensor, 23 ... Direction indicator lever, 24... Accelerator pedal operation amount sensor (Operating angle of an accelerator pedal detecting means), 25 ... Brake pedal operation amount sensor, 26 ... Navigation device, 27fL ... Wheel speed sensor, 28 ... Vehicle behavior sensor, 29 ... Input device, 30f, 30r ... Camera, 31f, 31r ... Radar, 41 ... Engine, 42 ... Electronically controlled brake, 43 ... Axle, 45 ... Brake disk, 46 ... Brake pad, 48 ... Information providing unit, 51 ... Road information acquisition unit, 52 ... Curve information calculation unit, 53 ... Driver's intention acquisition unit, 54 ... Deceleration intention determination unit, 55 ... Target deceleration calculation unit, 56 ... Deceleration control unit

Best Mode for Carrying Out the Invention

In the following, one embodiment of a vehicular deceleration aiding device according to the present invention will be described in detail based on the following drawings.

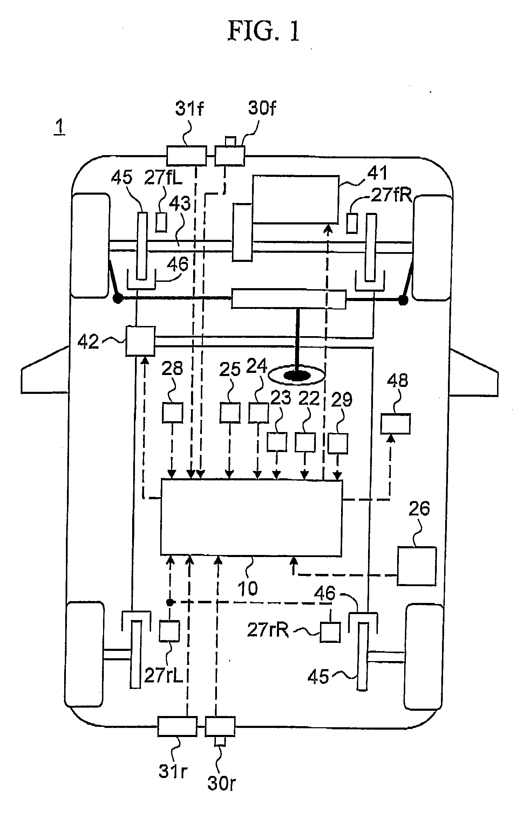

Figure 1 is an entire configuration diagram of a vehicle on which a deceleration aiding device according to the present embodiment is mounted.
A vehicle 1 with the deceleration aiding device according to the present embodiment includes a steering angle sensor 22 for steering, a direction indicator lever 23, an accelerator pedal operation amount sensor (an operating angle of an accelerator pedal detecting means) 24, and a brake pedal operation amount sensor 25 as devices for detecting operation of the vehicle by a driver. The devices are connected to a controller 10.

Detection signals detected by the sensors according to respective operation amounts by a driver are transmitted to the controller 10 including the deceleration aiding device. For example, in which direction a driver intends to drive the vehicle 1 can be detected from a detection signal obtained by the steering angle sensor 22. A driver's intention to accelerate, decelerate, or brake the vehicle can be detected from a detection signal obtained by the accelerator pedal operation amount sensor 24 or the brake pedal operation amount sensor 25. The operation amount detected by the accelerator pedal operation amount sensor 24 (a stepping amount by a driver) corresponds to an operating angle of an accelerator pedal. When a driver does not press down on an accelerator pedal, the operating angle of an accelerator pedal is zero. Furthermore, a driver's intention to change a route can be detected from the operation of the direction indicator lever 23.

The vehicle 1 also includes a navigation device 26 as a device for acquiring road information. The navigation device 26 is connected to the controller 10. The navigation device 26 has a map database. The navigation device 26 can estimate a subject vehicle position from GPS (Global Positioning System) information and information from other sensors, and thereby calculate a distance between a specific point in the map data and the position of the vehicle 1.

To be more specific, the unillustrated map database has feature information such as respective road points, stop lines in road areas, intersection areas, tunnels and other speed limit information. The information from other sensors is obtained by an acceleration sensor, a gyro sensor or the like. The navigation device 26 detects a set route, map information, the subject vehicle position on a map, the direction of the subject vehicle, and road information around the subject vehicle including information of a curved road in front of the vehicle (such as the width of each traffic lane, the number of traffic lanes, the curve information of each traffic lane, the width of each lane marker, the number of lane markers, the curve information of each lane marker, speed limits, limited highways and public highways distinguished from each other, and the presence or absence of junctions) from the map database and the information from the sensors, and transmits the information to the controller 10. The controller 10 thereby acquires the information.

The vehicle 1 further includes wheel speed sensors 27fL, 27fR, 27rL and 27rR, and a vehicle behavior sensor 28 as detection units for detecting the traveling state (the motion state) of the vehicle. The sensors are also connected to the controller 10. The wheel speed sensors 27L, 27R, 27rL and 27rR detect the rotational speeds of front, rear, right and left wheels of the vehicle 1. The detection signals are transmitted to the controller 10. The controller 10 calculates the speed of the vehicle 1 (a vehicle speed). The vehicle behavior sensor 28 detects a longitudinal acceleration, a lateral acceleration, and a yaw rate, and transmits the detected signals to the controller 10.

The vehicle 1 includes a front camera 30f, a front radar 31f, a rear camera 30r, and a rear radar 31r as devices for detecting an external environment around the subject vehicle. The devices are connected to the controller 10, and transmit information of lane markers, obstacles or the like around the subject vehicle to the controller 10. For example, the front camera 30f and the rear camera 30r have a traffic lane recognition function of acquiring information around the vehicle (the subject vehicle) 1 as an image, and recognizing a traffic lane based on lane markers or road boundaries in the acquired image. The front camera 30f recognizes lane markers such as white lines, and road boundaries such as road shoulders, and outputs each positional relationship with the vehicle 1, the interval between the lane markers of a subject traffic lane or an adjacent traffic lane, the interval between the right and left road boundaries, and the types of the lane markers and the road boundaries. The road information about the lane markers and the road boundaries includes information obtained at a plurality of positions in front of the vehicle 1, and also includes information obtained at a plurality of positions in the bacl.-ward and lateral directions of the vehicle 1. The type of the lane markers means types such as lines, cat's eyes and botts' dots, colors of lines, and types of lines (solid lines, dashed lines, dotted lines and hatches). The type of the road boundaries means edges of road shoulders, side ditches, curbs, guard rails, walls and embankments. The front camera 30f also recognizes obstacles such as other vehicles and pedestrians, and outputs each positional relationship with the vehicle 1.

The front radar 31f and the rear radar 31r recognize obstacles such as other vehicles and pedestrians, and output each positional relationship with the vehicle 1. The front radar 31f has a feature in that remote obstacles can be more accurately recognized than the front camera 30f. The front camera 30f has a wider detection angle than that of the front radar 31f and has a feature in that thereby the type of obstacles can be identified, According to the features, the information around the vehicle 1 can be accurately detected depending on the distance and direction from the vehicle 1.

The vehicle 1 includes driving devices such as an engine 41 and an electronically controlled brake 42 so as to drive and brake the vehicle 1. The engine 41 is mounted on the vehicle 1 as a prime mover, and connected to the controller 10. To be more specific, the engine 41 drives the vehicle 1 based on the operation amount by a driver and the external environment. The controller 10 outputs a control signal to a throttle valve provided in an air intake passage to adjust the amount of intake air into a combustion chamber. The controller 10 also outputs a control signal to an injector to adjust a fuel injected from the injector, to thereby adjust the fuel fed into the combustion chamber. The controller 10 causes combustion of a mixture of the fed fuel and the intake air in the combustion chamber, and transmits the combustion energy as power to the vehicle 1 to drive the vehicle 1.

For example, upon reception of the detection signal of the accelerator pedal operation amount sensor 24 detected according to the pedal operation amount by a driver, the controller 10 adjusts the air intake amount and the fuel injection amount into the engine 41 to perform acceleration and deceleration control on the vehicle. Also, when the controller 10 determines that the vehicle needs to be accelerated or decelerated based on the detected signals from the sensors mounted on the vehicle 1, the controller 10 similarly performs acceleration and deceleration control on the vehicle. For example, when deceleration control is performed on the vehicle 1 as described below, the controller 10 may perform so-called engine brake deceleration control by reducing the air intake amount and the fuel injection amount in combination with brake control described below.

The electronically controlled brake 42 is a device for decelerating or braking the vehicle 1 by pressing a brake disc 45 mounted on an axle 43 by a brake pad 46 and thereby braking the rotation of the axle 43. The electronically controlled brake 42 is connected to the controller 10. The electronically controlled brake 42 is operated based on the detection signal of the brake pedal operation amount sensor 25 detected according to the pedal operation amount by a driver, or a control signal from the controller 10 in deceleration control of the vehicle described below. Examples of the electronically controlled brake 42 include a hydraulic brake device capable of individually controlling braking forces applied to the respective wheels. Upon reception of a braking request, the electronically controlled brake 42 applies a braking force to the vehicle 1 while balancing the braking forces applied to the respective wheels. Upon reception of a turning request, the electronically controlled brake 42 applies a yaw moment to the vehicle by braking either the right wheels or the left wheels.

The vehicle 1 also includes an information providing unit 48 for providing information to a driver. The information providing unit 48 provides aiding information by displaying images, or emitting sounds or warning lights depending on the type of driving support. The information providing unit 48 is a monitoring device incorporating a speaker, for example, and may be installed at a plurality of positions, not at one position.

The controller 10 connected to various devices and sensors as described above includes hardware such as ECU, RAM and ROM (not shown). The ECU performs calculations to effect traveling control or the like including acceleration and deceleration of the vehicle by using data on the traveling control of the vehicle stored in the RAM and ROM, and outputs control signals to the engine 41 and the electronically controlled brake 42.

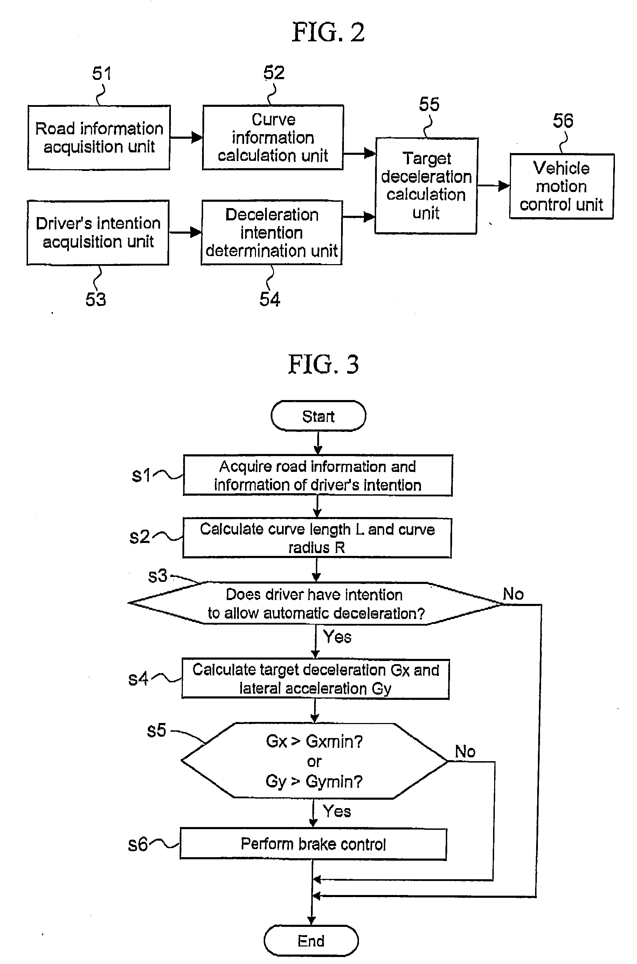

Figure 2 is a control block diagram of the deceleration aiding device (the controller 10) according to the present embodiment shown in Figure 1. As shown in Figure 2, the deceleration aiding device 10 includes a road information acquisition unit 51, a curve information calculation unit 52, a driver's intention acquisition unit 53, a deceleration intention determination unit 54, a target deceleration calculation unit 55, and a vehicle motion control unit (a deceleration control unit) 56.

The road information acquisition unit 51 is an acquisition unit for acquiring information of a curved road (a curve) in front of the vehicle, and information such as the position of each traffic lane, the curvature of each traffic lane, the width of each traffic lane, and the number of traffic lanes from at least one of the front camera 30f, the front radar 31f, and the navigation device 26 shown in Figure 1.

The curve information calculation unit 52 calculates a distance from the position of the traveling vehicle to the entrance position of the curved road in front of the vehicle (referred to as section length below), and the curvature (the radius of curvature) of the curved road based on the information from the road information acquisition unit 51 (particularly, the position of each traffic lane and the curvature of each traffic lane). To be more specific, the curved road includes a plurality of continuous arc portions which are a combination of a transition curve portion that gradually varies from a straight line to an arc curve (an arc portion) having a predetermined curvature, and an arc portion of a curved line having a smallest radius of curvature so as to allow the vehicle to make a steady turn. In the present embodiment, the curve information calculation unit 52 calculates the radii of curvature of the plurality of continuous arc portions constituting the curved road (the curved line) located in front of the vehicle. Subsequently, the curve information calculation unit 52 calculates the entrance position of a curved road having a smallest radius of curvature among the calculated radii of curvature, that is, the entrance position of a curved road where the vehicle makes a steady turn, and calculates the section length from the position of the traveling vehicle to the entrance position of the curved road.

The driver's intention acquisition unit 53 is an acquisition unit for acquiring information regarding the operation by a driver based on the information from the accelerator pedal operation amount sensor 24, the brake pedal operation amount sensor 25 and an unillustrated traveling mode setting switch. The driver's intention acquisition unit 53 also acquires the vehicle motion information such as the vehicle speed obtained by the wheel speed sensors, and the acceleration and lateral acceleration detected by the vehicle behavior sensor 28.

The deceleration intention determination unit 54 is a calculation unit for determining whether or not a driver has an intention to decelerate the vehicle based on the information from the driver's intention acquisition unit 53. To be more specific, the deceleration intention determination unit (a start timing determination unit) 54 determines a start timing for starting deceleration control of the vehicle according to a timing when the operating angle of an accelerator pedal is zero (when a driver releases the pressing of the accelerator pedal) based on the accelerator pedal operation amount sensor 24 as the driving state of the vehicle. For example, when the operating angle of an accelerator pedal is zero (when the accelerator pedal is released), the deceleration intention determination unit 54 determines that the driver has the intention to decelerate the vehicle.

The target deceleration calculation unit 55 calculates a target deceleration before the vehicle enters the entrance position of the curved road in front of the vehicle and a target lateral acceleration acting on the vehicle when traveling along the curved road (passing through the curved road) based on the section length, the smallest radius of curvature of the curved road and the vehicle speed at the start timing of the deceleration control according to the driver's deceleration intention. To be more specific, the target deceleration calculation unit 55 calculates the target deceleration based on the section length, the vehicle speed and the smallest radius of curvature of the curved road at the start timing of the deceleration control such that the deceleration of the vehicle in the deceleration control is larger as the section length at the start timing of the deceleration control is shorter, or the deceleration of the vehicle in the deceleration control and the lateral acceleration of the vehicle when traveling along the curved road are larger as the section length is shorter.

The vehicle motion control unit (the deceleration control unit) 56 controls the vehicle motion based on the target deceleration calculated by the target deceleration calculation unit 55. To be more specific, in the present embodiment, the deceleration control unit 56 determines whether or not the deceleration control is required. When determining that the deceleration control is required, the deceleration control unit 56 drives the electronically controlled brake 42 to perform the deceleration control on the vehicle by brake control that applies a braking force to the vehicle. According to another aspect, the deceleration control unit may perform the deceleration control in combination with engine control by reducing the fuel injection amount and the air intake amount into the engine 41.

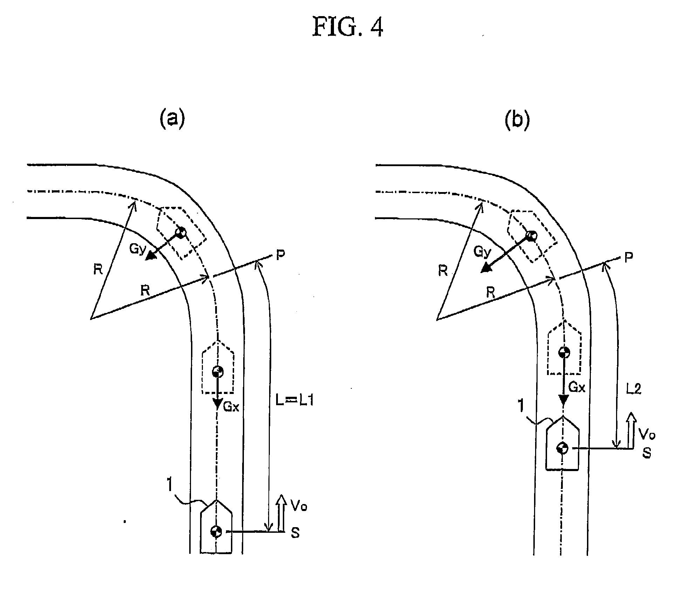

Figure 3 is a control flow chart for performing the deceleration control based on the control block diagram of the deceleration aiding device (the controller 10) shown in Figure 2. Figures 4 are views for explaining a relationship between the vehicle and the curved road in the deceleration control. Figure 4(a) is a view for explaining the deceleration control when a section length L is long, and Figure 4(b) is a view for explaining the deceleration control when the section length L is shorter than that in Figure 4(a).

In step s1, the road information acquisition unit 51 acquires the road information such as the position and curvature of each traffic lane from various sensors such as the front camera 30f, the front radar 31f and the navigation device 26. Moreover, the driver's intentions acquisition unit 53 acquires the vehicle motion information such as the operation by a driver and the speed.

In step s2, the curve information calculation unit 52 calculates a section length L between the subject vehicle 1 and the curved road and a smallest radius of curvature R of the curved road as shown in Figures 4(a) and (b) based on the traffic lane information, To be more specific, the curve information calculation unit 52 calculates the radii of curvature of the plurality of arcs constituting the curve (the curved line) of the continuous curved road located in front of the vehicle, and employs the radius of curvature R of the curved road that is the smallest radius of curvature of the continuous curved road. The curve information calculation unit 52 further calculates an entrance position (point) P of the curved road having the smallest radius of curvature R, and calculates the length L from a position S of the traveling vehicle 1 to the entrance position of the curved road. If the smallest radius of curvature R of the curved road cannot be detected due to the performance limit of the front camera 30f or the navigation device 26, the smallest radius of curvature and the section length to the curve may be estimated from the radius of curvature at the entrance position or the like of the curved road constituted by a transition curve.

In step s3, the deceleration intention determination unit 54 determines whether or not a driver allows intervention of automatic deceleration from the information of the operation amount by the driver. When the driver releases the accelerator pedal, the operating angle of an accelerator pedal is zero. Thus, the deceleration intention determination unit 54 determines that the driver has an intention to allow the automatic deceleration, and determines the timing as the start timing of the deceleration control of the vehicle. The process then proceeds to step s4. When the deceleration intention determination unit 54 determines that the driver does not have an intention to allow the automatic deceleration, the process ends without performing the deceleration control on the vehicle.

In step s4, the target deceleration calculation unit 55 calculates a target deceleration (corresponding to a largest value of the deceleration obtained when the vehicle is actually traveling) Gx before the vehicle enters the curved road, and a target lateral acceleration (corresponding to a largest value of the lateral acceleration obtained when the vehicle is actually traveling) Gy when the vehicle is passing through the curved road (traveling along the curved road) from the section length L between the position S of the vehicle 1 and the entrance position P of the curved road at the start timing of the deceleration control of the vehicle, the smallest radius of curvature R of the curved road, and a present vehicle speed (a vehicle speed at the start timing of the deceleration control of the vehicle) Vo as shown in Figures 4(a) and (b). The target deceleration calculation unit 55 calculates the target deceleration such that the target deceleration Gx and the target lateral acceleration Gy have a predetermined ratio.

To be more specific, a constraint condition for causing the target deceleration Gx and the target lateral acceleration Gy to be equal to each other can be expressed by the following expression (1).

$$Gx=Gy \qquad \dots (1)$$

When the vehicle travels with the deceleration Gx through the section length L, the lateral acceleration Gy obtained when the vehicle is traveling along the curved road can be expressed by the following expression (2) from the law of conservation of energy,

$$Vo^2/2=LGx+RGy/2 \qquad \dots (2)$$

The target deceleration Gx and the target lateral acceleration Gy can be expressed by the following expression (3) based on the above two expressions (1) and (2),

$$Gx=Gy=Vo^2/(2L+R) \qquad \dots (3)$$

By performing control such that the target deceleration Gx and the target lateral acceleration Gy are equal to each other as described above, the deceleration control by which the magnitude of an acceleration vector within a horizontal plane $(Gx2+Gy2)^{1/2}$ does not vary a lot, which is robust with respect to a change in a road surface friction coefficient and which makes drivers less uncomfortable can be achieved.

Particularly, as is clear from the expression (3), the target deceleration Gx calculated from the expression (3) is almost equal to the actual deceleration Gx acting on the vehicle before entering the curved road. The target deceleration Gx is calculated based on the radius of curvature (the smallest radius of curvature) of the curved road, the section length L and the vehicle speed Vo such that the target deceleration Gx is larger as the section length L calculated at the start timing is shorter, and in contrast, the target deceleration Gx is smaller as the section length L calculated at the start timing is longer.

The target lateral acceleration Gy calculated from the expression (3) is almost equal to the actual lateral acceleration Gy acting on the vehicle traveling along the curved road, By performing the deceleration control using the calculated target deceleration Gx, the actual lateral acceleration is larger as the section length L calculated at the start timing is shorter, and in contrast, the actual lateral acceleration is smaller as the section length L calculated at the start timing is longer.

That is, by using the expression (3) in step s4, the target deceleration calculation unit 55 calculates the target deceleration based on the section length L and the vehicle speed Vo at the start timing such that the deceleration is larger and the lateral acceleration of the vehicle traveling along the curved road is larger as the section length L calculated at the start timing is shorter.

In the present embodiment, the deceleration may be calculated by using only the expression (2) without considering centripetal force energy of the lateral acceleration Gy in the expression (2). In this case, the target deceleration calculation unit 55 calculates the target deceleration based on the section length L and the vehicle speed Vo at the start timing such that at least the target deceleration is larger as the section length L calculated at the start timing is shorter.

Also, the following expression (4) may be applied as a constraint condition by setting the target lateral acceleration Gy to N times the target deceleration Gx, for example, such that the actual lateral acceleration and the actual deceleration have different largest values,

$$N \times Gx=Gy \qquad \dots (4)$$

In this case, the target deceleration Gx and the target lateral acceleration Gy can be obtained from the next expression (5) based on the expressions (4) and (2).

$$Gx=Gy/N=Vo^2/(2L+N \times R) \qquad \dots (5)$$

Although the target deceleration Gx and the target lateral acceleration Gy are not equal to each other, the target values can be limited such that the largest values of the actual deceleration Gx and the actual lateral acceleration Gy have a predetermined ratio N. Accordingly, the robust deceleration control with respect to a change in a road surface friction coefficient can be achieved.

The above ratio N may be changed in the deceleration aiding device 10 (a ratio change unit) based on a ratio N input through an input device 29 shown in Figure 1 by a driver, or may be also changed in the deceleration aiding device 10 (the ratio change unit) in accordance with the automatic traveling control during the automatic driving control.

In step s5, the deceleration control unit 56 first determines whether or not the brake control is required. When the target deceleration Gx obtained in step s4 is larger than a predetermined minimum deceleration Gxmin, or when the target lateral acceleration Gy is larger than a predetermined minimum lateral acceleration Gymin, the deceleration control unit 56 determines that the deceleration by the brake control is required, and the process proceeds to step s6. Meanwhile, when the target deceleration Gx is equal to or smaller than the minimum deceleration Gxmin, the deceleration control unit 56 determines that the vehicle is sufficiently decelerated only by the engine brake and traveling resistance, and finishes the control without performing the brake control (the deceleration control). When the target lateral acceleration Gy is equal to or smaller than the minimum lateral acceleration Gymin, the deceleration control unit 56 determines that the vehicle can pass through the curved road by keeping the present speed V, and finishes the control without performing the brake control.

Tin step s6, in order for the target deceleration Gx calculated in step s5 to be generated on the vehicle 1, to be more specific, the electronically controlled brake 42 is driven to apply a braking force according to the target deceleration Gx to the vehicle 1.

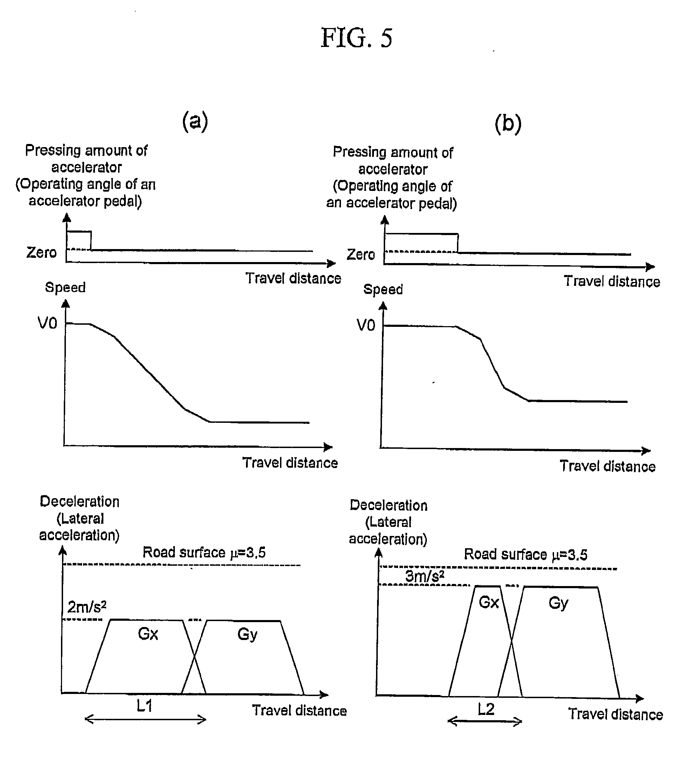

Figures 5 are views illustrating changes in the vehicle speed, the deceleration and the lateral acceleration when the deceleration control according to the present embodiment is performed. Figure 5(a) is a view illustrating changes in the deceleration control when the section length L is long, and Figure 5(b) is a view illustrating changes during the deceleration control when the section length L is shorter than that in Figure 5(a). Figures 5(a) and (b) will be described below in correlation with Figures 4(a) and (b) described above.

. As shown in Figures 4(a) and 5(a), when the accelerator pedal is released at the timing of a section length L1, the target deceleration Gx and the target lateral acceleration Gy are calculated based on the section length L1, the smallest radius of curvature R of the curved road, and the vehicle speed Vo, and the deceleration control is performed using the target deceleration Gx. In the present embodiment, when the section length is L1, the target deceleration Gx and the target lateral acceleration Gy are both 2 $m/s^2$. In the deceleration control, the vehicle 1 travels with the deceleration Gx and the lateral acceleration Gy as shown in Figure 5(a).

When the accelerator pedal is released at a section length L2 that is shorter than the section length L1 on the same curved road as shown in Figures 4(b) and 5(b), the target deceleration Gx is calculated such that the target deceleration Gx and the target lateral acceleration Gy calculated based on the section length L2, the smallest radius of curvature R of the curved road, and the vehicle speed Vo at the start timing of the deceleration control are larger than those in the case of the section length L1, and the deceleration control is performed based on the target deceleration. In the present embodiment, the target deceleration Gx and the target lateral acceleration Gy are both 3 $m/s^2$. In the deceleration control, the vehicle 1 travels with the deceleration Gx and the lateral acceleration Gy as shown in Figure 5(b).

If the road surface friction coefficient is equivalent to 3.5 $m/s^2$, the vehicle can pass through the curved road without losing steering stability. Since the actual deceleration and the actual lateral acceleration are equal to each other, the vehicle motion is smooth, so that the deceleration control which makes drivers less uncomfortable can be achieved.

Since the entrance position P of the curved road is employed as the entrance position of the curved road having the smallest radius of curvature R for calculating the section length L, the driver can drive the vehicle into the curved road without feeling uncomfortable even when the deceleration control is performed. When the driver releases the accelerator pedal at a vehicle position closer to the curved road as shown in Figure 5(b), a driver's intention to pass through the curved road at a high speed is shown. In this case, in the present embodiment, the deceleration control is performed such that the lateral acceleration Gy when the vehicle is passing through the curved road (traveling along the curved road) is larger since the start timing of the deceleration control is delayed (that is, the section length is short). Thus, the vehicle can pass through the curved road at a higher vehicle speed than that shown in Figure 5(a), so that the driver's intention can be reflected.

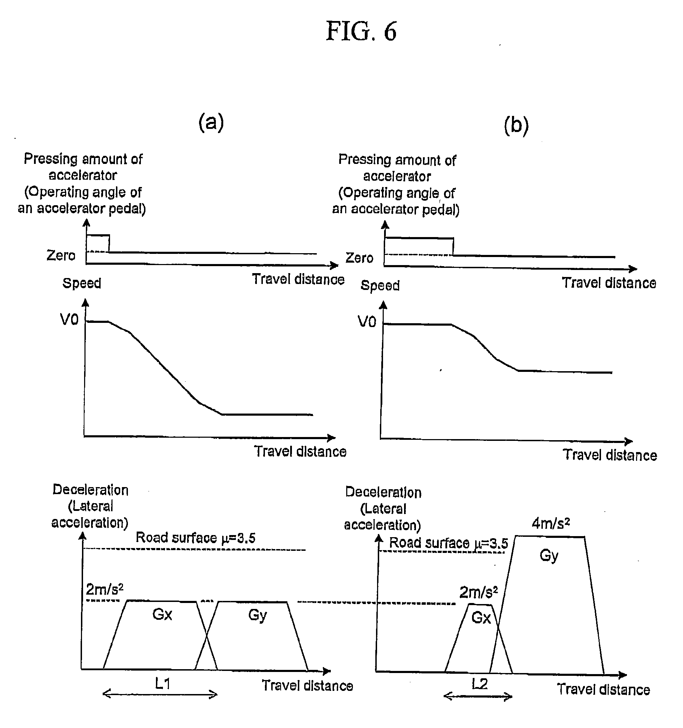

Figures 6 are views illustrating changes in the vehicle speed, the deceleration and the lateral acceleration when the target deceleration is fixed regardless of the section length. Figure 6(a) is a view illustrating changes in the deceleration control when the section length L is long, and Figure 6(b) is a view illustrating changes during the deceleration control when the section length L is shorter than that in Figure 6(a).

In Figure 6(a), the accelerator pedal is released at the section length L1, and the deceleration control is performed until the entrance position of the curved road with the target deceleration Gx=2 $m/s^2$. The deceleration is finished after the vehicle reaches the entrance position P of the curved road having the smallest radius of curvature R. In this case, the result similar to that shown in Figure 5(a) is obtained.

However, in a case where the accelerator pedal is released at the shorter section length L2 and the deceleration control is performed with the target deceleration Gx=2 m/s$^2$, a length for deceleration is not long enough. Thus, the speed of passing through the curved road is increased, and the lateral acceleration reaches 4 m/s$^2$. If the road surface friction coefficient is equivalent to 3.5 m/s$^2$, the vehicle cannot pass through the curved road with the lateral acceleration of 4 m/s$^2$. Thus, the traveling trajectory may be expanded.

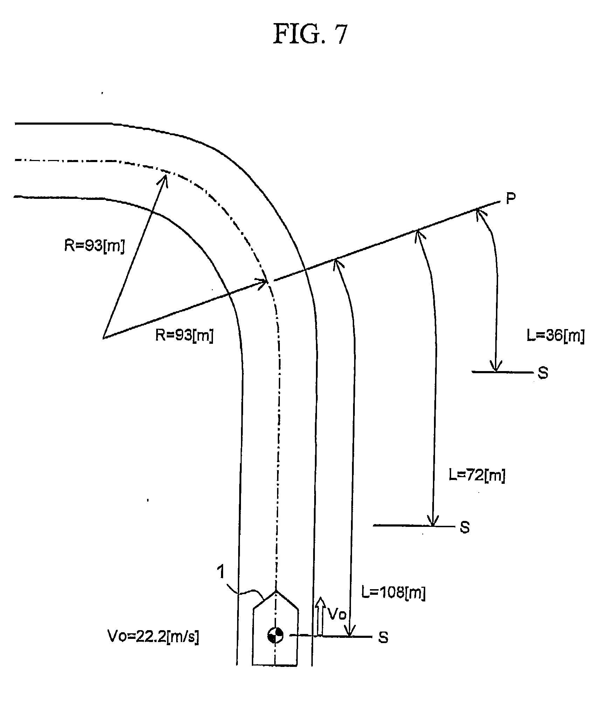

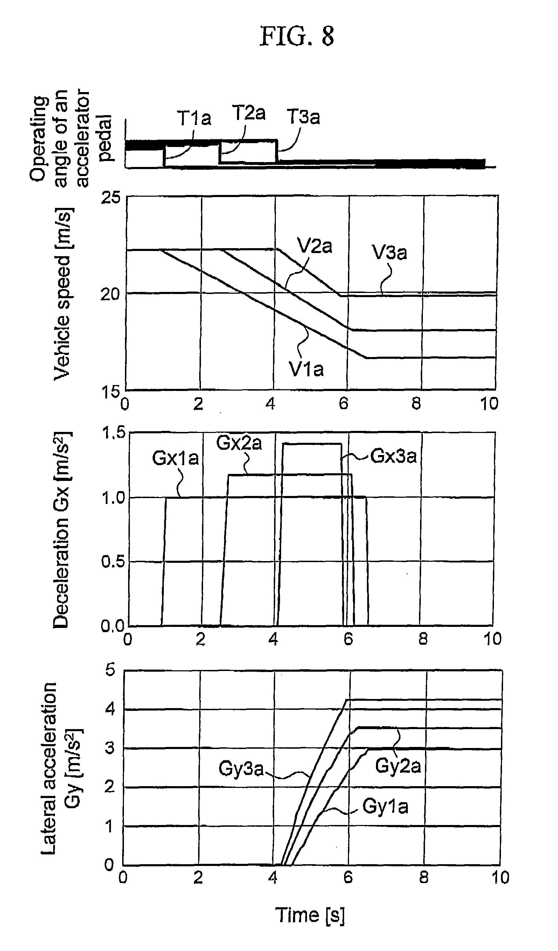

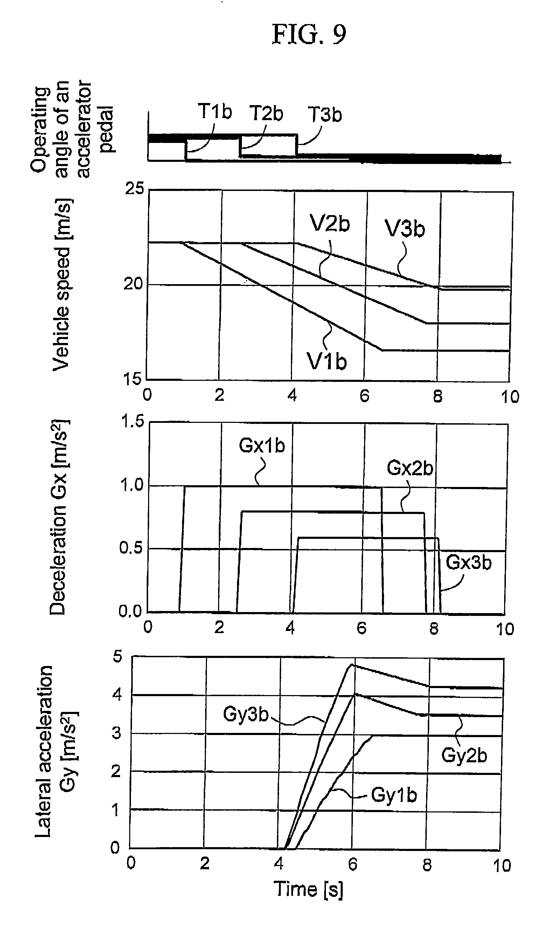

Figure 7 is a view for explaining a relationship between the vehicle and the curved road in the deceleration control. Figure 8 shows the vehicle speed, the deceleration, and the lateral acceleration when the deceleration control is performed using the deceleration aiding device according to the present embodiment. Figure 9 shows the vehicle speed, the deceleration, and the lateral acceleration when the deceleration control is performed using a conventional control device.

As shown in Figure 7, it is assumed that the accelerator pedal is released at timings of three section lengths 108 m, 72 m, and 36 m when the vehicle is approaching a curved road having a smallest radius of curvature R93 m, and the vehicle speed at the deceleration control timing (the timing when the accelerator pedal is released) is 22.2 m/s (80 km/h).

The vehicle speed, deceleration, lateral acceleration in Figure 8 are values obtained when the ratio of the target deceleration Gx and the target lateral acceleration Cry is set to 1:3, the target deceleration Gx is calculated based on the above condition and the expression (5), and the deceleration control is performed based on the calculation result. In Figure 8, the operating angle of an accelerator pedal is represented by T1a, T2a, and T3a, the vehicle speed V1a, V2a, and V3a, the deceleration Gx1a, Gx2a, and Gx3a, and the lateral acceleration Gy1a, Gy2a and Gy3a in the order of the timing when the accelerator pedal is released.

As shown in Figure 8, in the present embodiment, the deceleration control is performed on the vehicle such that the deceleration before entering the entrance position of the curved road is larger in the deceleration control as the subject vehicle is closer to the curved road at the start timing of the deceleration control. Thus, the actual deceleration peaks in the order of Gx1a<Gx2a<Gx3a. Also, the time length for the deceleration control is shorter as the vehicle is closer to the curved road. The actual lateral acceleration peaks in the order of Gy1a<Gy2a<Gy3a, and the vehicle speed when the vehicle is traveling along the curved road is also in the order of V1a<V2a<V3a. Since the deceleration control is performed up to the entrance position P of the curved road having the smallest radius of curvature, the deceleration control is finished before the lateral acceleration reaches its peak, so that the vehicle speed can be reduced to a sufficient level. Thus, the lateral acceleration monotonically increases. That is, the lateral acceleration does not indicate a local maximum value, and the deceleration control by which the acceleration of the vehicle is difficult to exceed the road surface friction coefficient can be achieved.

Meanwhile, Figure 9 shows the case in which the deceleration control is performed on the vehicle such that the deceleration before entering the curved road is smaller as the section length between the subject vehicle and the entrance position of the curved road at the start timing of the deceleration control is shorter. The deceleration control is started at the same timing as the starting timing according to the present embodiment. It is assumed that the deceleration control is performed such that the final vehicle speed and lateral acceleration obtained when the vehicle is passing through the curved road (traveling along the curved road) are equal to those in Figure 8. In the present embodiment, the operating angle of an accelerator pedal is represented by T1b, T2b, and T3b, the vehicle speed V1b, V2b, and V3b, the deceleration Gx1b, Gx2b, and Gx3b, and the lateral acceleration Gy1b, Gy2b and Gy3b in the order of the timing when the accelerator pedal is released.

When the deceleration control is performed in a conventional manner as shown in Figure 9, the vehicle is controlled such that the deceleration before entering the curved road is larger as the subject vehicle is closer to the curved road at the start timing of the deceleration control. Thus, the actual deceleration peaks in the order of Gx3b<Gx2b<Gx1b. Also, the actual lateral acceleration peaks in the order of Gy1b<Gy2b<Gy3b. Since the deceleration control is not finished before the lateral acceleration reaches its peak, the vehicle speed when entering the curved road cannot be reduced to a sufficient level. As a result, the lateral acceleration temporarily indicates a larger value than that obtained when the deceleration control according to the present embodiment is performed (Figure 8). That is, when the vehicle travels under the conventional deceleration control, the lateral acceleration acting on the vehicle may indicate a local maximum value while the vehicle is traveling along the curved road. The lateral acceleration may exceed the road surface friction coefficient during this time, so that the vehicle cannot pass through the curved road. Thus, the traveling trajectory may be expanded.

Although the section length L and the smallest radius of curvature R of the curved road are obtained by employing the point having the smallest radius of curvature of the curved road as a reference position in the present embodiment, the target deceleration Gx and the target lateral acceleration Gy may be also obtained with respect to a plurality of reference positions without specifying the point having the smallest radius of curvature of the curved road.

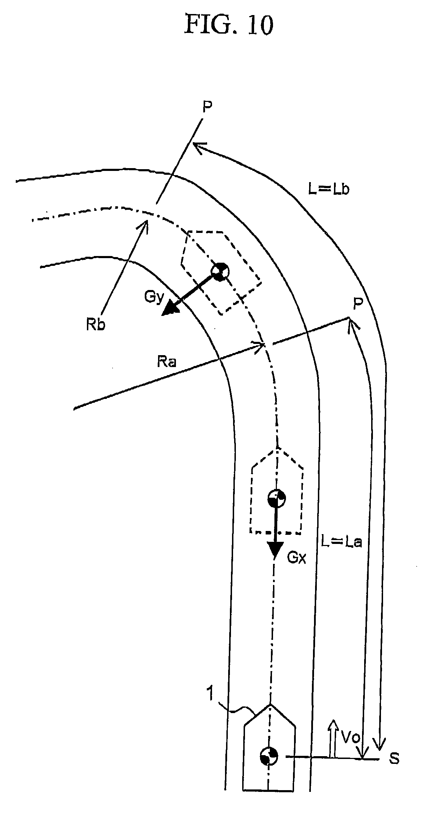

For example, as shown in Figure 10, a target deceleration Gxa and a target lateral acceleration Gya are obtained for a section length La and a radius Ra of a curved road at one reference position. Also, a target deceleration Gxb and a target lateral acceleration Gyb are obtained for a section length Lb and a radius Rb of a curved road at another reference position.

To be more specific, the curve information calculation unit 52 calculates the radii of curvature of the plurality of arcs constituting the curved road based on the information of the curved road. The curve information calculation unit 52 sets the positions of the curved road where the radii of curvature are respectively calculated as the entrance position of the curved road, and calculates the respective section lengths La and Lb between the vehicle and the respective entrance positions of the curved road as the section length.

Subsequently, the target deceleration calculation unit 55 calculates the target decelerations Gxa, Gxb and so on in the respective section lengths by using the above expressions. The target decelerations Gxa, Gxb and so on are compared with each other and the largest target deceleration is selected as the final target deceleration Gx. The deceleration control unit 56 performs the deceleration control on the vehicle based on the largest target deceleration among the target decelerations. Accordingly, the deceleration control by which the acceleration of the vehicle is difficult to exceed the road surface friction coefficient can be achieved even with respect to a curved road having a complicated shape and a complex curved road such as an S-shaped curve.

As described above, according to the present embodiment, the start timing of the deceleration control is determined based on the operation state by a driver, and the deceleration control is performed on the vehicle such that the deceleration before entering the curved road is larger as the section length between the position of the subject vehicle and the entrance position of the curved road at the start timing of the deceleration control is shorter. Therefore, the deceleration control which reflects the driver's intention more accurately, and by which the acceleration of the vehicle is difficult to exceed the road surface friction coefficient can be achieved.

Although the embodiment of the present invention has been described in detail by reference to the drawings, specific configuration should not be limited to those in the embodiment, and the present invention may include design changes within the scope that does not depart from the gist of the present invention.

For example, in the present embodiment, the section length to the entrance position of the curved road in the arc portion having the smallest radius of curvature is calculated, and the deceleration control is performed in the section length, so that the driver can drive the vehicle without feeling uncomfortable. However, a series of the aforementioned deceleration control may be performed by employing the entrance position of the curved road as the entrance position of a transition curve portion. In this case, the deceleration control by which the acceleration of the vehicle is difficult to exceed the road surface friction coefficient can be achieved,

In the present embodiment, the start timing determination unit determines the start timing according to the timing when the driver releases the accelerator pedal, that is, when the operating angle of an accelerator pedal is zero as the driving state of the vehicle. However, for example, when automatic traveling control or the like is performed, the start timing may be determined according to a control signal to decelerate the vehicle from the controller to the electronically controlled brake.

In the present embodiment, the target deceleration calculation unit calculates the target deceleration based on the section length, the vehicle speed, the smallest radius of curvature of the curved road and the like at the start timing of the deceleration control such that the deceleration of the vehicle in the deceleration control is larger as the section length at the start timing of the deceleration control is shorter by using the law of conservation of energy, so that the target deceleration can be more simply calculated. However, for example, a reference deceleration may be set in advance from a relationship map of the section length, the radius of curvature of the curved road, and the vehicle speed at the start timing of the deceleration control, and the target deceleration may be calculated (corrected) based on the reference deceleration such that the deceleration of the vehicle in the deceleration control is larger as the section length at the start timing of the deceleration control is shorter.

The present specification encompasses the contents disclosed in the specification and/or drawing of JP Patent Application No. 2008-246152 based on which the present application claims priority.

**Claims**

1. A vehicular deceleration aiding device comprising: a road information acquisition unit for acquiring information of a curved road in front of a vehicle; a curve information calculation unit for calculating a section length from the vehicle to an entrance position of the curved road based on the information of the curved road; a start timing determination unit for determining a start timing for starting deceleration control of the vehicle according to a driving state of the vehicle; a target deceleration calculation unit for calculating a target deceleration in the deceleration control; and a deceleration control unit for performing deceleration control on the vehicle based on the target deceleration, wherein the target deceleration calculation unit calculates the target deceleration based on the section length and a vehicle speed at the start timing such that a deceleration of the vehicle in the deceleration control is larger as the section length is shorter. '

**2.** A vehicular deceleration aiding device comprising: a road information acquisition unit for acquiring information of a curved road in front of a vehicle; a curve information calculation unit for calculating a section length from the vehicle to an entrance position of the curved road based on the information of the curved road; a start timing determination unit for determining a start timing for starting deceleration control of the vehicle according to a driving state of the vehicle; a target deceleration calculation unit for calculating a target deceleration in the deceleration control; and a deceleration control unit for performing deceleration control on the vehicle based on the target deceleration, wherein the target deceleration calculation unit calculates the target deceleration based on the section length and a vehicle speed at the start timing such that a deceleration of the vehicle in the deceleration control and a lateral acceleration of the vehicle when traveling along the curved road are larger as the section length is shorter.

**3.** The vehicular deceleration aiding device according to claim 1, wherein the deceleration control unit performs the deceleration control until the vehicle reaches the entrance position of the curved road.

**4.** The vehicular deceleration aiding device according to claim 1, wherein the curve information calculation unit calculates radii of curvature of a plurality of continuous arc portions constituting the curved road based on the information of the curved road, and calculates the section length by employing an entrance position of the curved road in an arc portion having a smallest radius of curvature as the entrance position of the curved road.

**5.** The vehicular deceleration aiding device according to claim 1, wherein the start timing determination unit determines the start timing according to a timing when an operating angle of an accelerator pedal is zero as the driving state of the vehicle.

**6.** The vehicular deceleration aiding device according to claim 2, wherein the target deceleration is calculated such that a largest value of the lateral acceleration and a largest value of the deceleration before the vehicle enters the curved road have a predetermined ratio.

**7.** The vehicular deceleration aiding device according to claim 6, wherein the target deceleration calculation unit comprises a ratio change unit for changing the ratio.

**8.** The vehicular deceleration aiding device according to claim 1, wherein the curve information calculation unit calculates radii of curvature of a plurality of continuous arc portions constituting the curved road based on the information of the curved road, sets curved road positions where the radii of curvature are respectively calculated, as the entrance position of the curved road, and calculates a section length from the vehicle to each of the curved road positions as the section length,

the target deceleration calculation unit calculates the target deceleration with respect to each of the section lengths, and

the deceleration control unit performs the deceleration control on the vehicle based on a largest target deceleration among the target decelerations.

**9.** The vehicular deceleration aiding device according to claim 2, wherein the deceleration control unit performs the deceleration control until the vehicle reaches the entrance position of the curved road.

**10.** The vehicular deceleration aiding device according to claim 2, wherein the curve information calculation unit calculates radii of curvature of a plurality of continuous arc portions constituting the curved road based on the information of the curved road, and calculates the section length by employing an entrance position of the curved road in an arc portion having a smallest radius of curvature as the entrance position of the curved road.

**11.** The vehicular deceleration aiding device according to claim 2, wherein the start timing determination unit determines the start timing according to a timing when an operating angle of an accelerator pedal is zero as the driving state of the vehicle.

**12.** The vehicular deceleration aiding device according to claim 2, wherein the curve information calculation unit calculates radii of curvature of a plurality of continuous arc portions constituting the curved road based on the information of the curved road, sets curved road positions where the radii of curvature are respectively calculated, as the entrance position of the curved road, and calculates a section length from the vehicle to each of the curved road positions as the section length,

the target deceleration calculation unit calculates the target deceleration with respect to each of the section lengths, and

the deceleration control unit performs the deceleration control on the vehicle based on a largest target deceleration among the target decelerations.

# FIG. 1

# FIG. 2

```
   51                    52                    55
Road information      Curve                            Vehicle
acquisition unit  →   information    →    Target   →  motion
                      calculation         deceleration control unit
                      unit                calculation
                                          unit          56

Driver's intention    Deceleration
acquisition unit  →   intention
                      determination
                      unit
   53                    54
```

# FIG. 3

```
              ( Start )
                 │
s1 ──  Acquire road information and
       information of driver's intention
                 │
s2 ──  Calculate curve length L and curve
       radius R
                 │
s3 ──  Does driver have intention        ── No ──┐
       to allow automatic deceleration?          │
              │ Yes                               │
s4 ──  Calculate target deceleration Gx and       │
       lateral acceleration Gy                    │
                 │                                │
s5 ──      Gx > Gxmin?                            │
              or               ── No ──┐          │
           Gy > Gymin?                 │          │
              │ Yes                    │          │
s6 ──  Perform brake control           │          │
                 │ ◄───────────────────┘◄─────────┘
                 │
              ( End )
```

# FIG. 4

(a)

(b)

# FIG. 5

(a)

Pressing amount of
accelerator
(Operating angle of an
accelerator pedal)

Zero

Travel distance

Speed

V0

Travel distance

Deceleration
(Lateral
acceleration)

Road surface μ=3,5

2m/s²

Gx          Gy

L1

Travel distance

(b)

Pressing amount of
accelerator
(Operating angle of
an accelerator pedal)

Zero

Travel distance

Speed

V0

Travel distance

Deceleration
(Lateral
acceleration)

Road surface μ=3,5

3m/s²

Gx          Gy

L2

Travel distance

# FIG. 6

(a)

(b)

Pressing amount of
accelerator
(Operating angle of
an accelerator pedal)

Pressing amount of
accelerator
(Operating angle of
an accelerator pedal)

Zero

Travel distance

Zero

Travel distance

Speed

Speed

V0

V0

Travel distance

Travel distance

Deceleration
(Lateral
acceleration)

Deceleration
(Lateral
acceleration)

Road surface μ=3.5

Road surface μ=3.5

4m/s²

2m/s²

Gx

Gy

2m/s²

Gy

Gx

L1

Travel distance

L2

Travel distance

# FIG. 7

R=93[m]

R=93[m]

P

L=36[m]

S

L=72[m]

S

1

L=108[m]

Vo

Vo=22.2[m/s]

S

# FIG. 8

# FIG. 9

# FIG. 10

## INTERNATIONAL SEARCH REPORT

| International application No. |
|---|
| PCT/JP2009/063385 |

A. CLASSIFICATION OF SUBJECT MATTER
B60T7/12(2006.01)i

According to International Patent Classification (IPC) or to both national classification and IPC

B. FIELDS SEARCHED

Minimum documentation searched (classification system followed by classification symbols)
B60T7/12

Documentation searched other than minimum documentation to the extent that such documents are included in the fields searched

| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-256593 A (Toyota Motor Corp.), 28 September 2006 (28.09.2006), | 1-3,5,8-9, 11-12 |
| Y | paragraphs [0033] to [0036], [0051] to [0052], [0061], [0065], [0151], [0154] & US 2006/0190158 A1 & EP 1693242 A2 | 4,10 |
| Y | JP 2005-329896 A (Nissan Motor Co., Ltd.), 02 December 2005 (02.12.2005), paragraphs [0031], [0040] (Family: none) | 4,10 |
| A | JP 2007-127101 A (Nissan Motor Co., Ltd.), 24 May 2007 (24.05.2007), entire text & US 2007/0106445 A1 | 1-12 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 October, 2009 (21.10.09) | 02 November, 2009 (02.11.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

22

**INTERNATIONAL SEARCH REPORT**

| | International application No. |
|---|---|
| | PCT/JP2009/063385 |

---

**Box No. II**      **Observations where certain claims were found unsearchable (Continuation of item 2 of first sheet)**

This international search report has not been established in respect of certain claims under Article 17(2)(a) for the following reasons:

1. ☐   Claims Nos.:
     because they relate to subject matter not required to be searched by this Authority, namely:

2. ☐   Claims Nos.:
     because they relate to parts of the international application that do not comply with the prescribed requirements to such an extent that no meaningful international search can be carried out, specifically:

3. ☐   Claims Nos.:
     because they are dependent claims and are not drafted in accordance with the second and third sentences of Rule 6.4(a).

---

**Box No. III**      **Observations where unity of invention is lacking (Continuation of item 3 of first sheet)**

This International Searching Authority found multiple inventions in this international application, as follows:
     The matter common to the invention of claims 1 – 2 and 6 – 7, the invention of claims 3 and 9, the invention of claims 4 and 10, the invention of claims 5 and 11, and the invention of claims 8 and 12 is that the calculation of a target deceleration is performed so that the deceleration of a vehicle at a deceleration control time becomes the higher, the shorter the block distance is.
     However, said common matter is not novel so that it is not a special technical feature, since said common matter is described in JP 2006-256593 A (Toyota Motor Corp.), 28 September 2006 (28.09.2006), paragraphs [0033] – [0036].
     (continued to extra sheet)

1. ☐   As all required additional search fees were timely paid by the applicant, this international search report covers all searchable claims.

2. ☒   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**      ☐   The additional search fees were accompanied by the applicant's protest and, where applicable,
the                              payment of a protest fee.

                                 ☐   The additional search fees were accompanied by the applicant's protest but the applicable protest fee was not paid within the time limit specified in the invitation.

                                 ☐   No protest accompanied the payment of additional search fees.

Form PCT/ISA/210 (continuation of first sheet (2)) (April 2007)

**INTERNATIONAL SEARCH REPORT**

International application No.

PCT/JP2009/063385

Continuation of Box No.III of continuation of first sheet(2)

Hence, the invention of claims 1 – 2 and 6 – 7, the invention of claims 3 and 9, the invention of claims 4 and 10, the invention of claims 5 and 11, and the invention of claims 8 and 12 do not have any common special technical feature and do not comply with the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007230440 A
- JP 2008246152 A